# EUROPEAN PATENT APPLICATION

(11) **EP 4 682 593 A1**
(43) Date of publication of application: **21.01.2026**
(21) Application number: 25170107.4
(22) Date of filing: 11.04.2025
(51) Int. Cl.: G02B 5/128

(54) **A COLOURED REFLECTIVE FILM, PREFERABLY GOLDEN**

(30) Priority: 17.07.2024 IT 202400016546
(71) Applicant: Corradi, Lella, 41019 Soliera (MO) (IT); Corradi, Lisa, 41012 Carpi (MO) (IT)
(72) Inventor: Corradi, Lella, 41019 Soliera (MO) (IT); Corradi, Lisa, 41012 Carpi (MO) (IT)
(74) Representative: Casadei, Giovanni

(57) **Abstract**

A reflective film, comprising:
a first layer (1), comprising a plurality of microspheres (ms);
a second layer (2) comprising a resin in which the microspheres (ms) are partially embedded;
a third layer (3) comprising a resin, associated with the second layer (2) on the opposite side with respect to the first layer (1);
the second layer (2) comprises a plurality of reflective particles (21).

## Description

### DESCRIPTION

The present invention relates to a reflective film with iridescent colour.

In particular, the invention relates to a reflective microsphere film.

As known in the field, reflective microsphere films substantially comprise a layer of glass microspheres which, for a surface portion, are covered with a layer of metal, typically silver. The microspheres are associated with a layer of resin that performs a support function and allows application of the film to a rigid or flexible surface. For example, the film can be applied to garments of various nature.

The current reflective microsphere films reflect a white light. This is because, in order not to drastically reduce the intensity of the reflected luminous radiation, the resins used for the support and fixing of the microspheres are transparent. Currently, the addition of a dye to the resins, as also the use of microspheres made of coloured glass, drastically reduce the intensity of the reflected radiation.

For numerous uses, such as high-visibility safety clothing for example, it would be particularly advantageous to be able to have coloured reflective films that are capable of reflecting a radiation with good intensity.

Furthermore, metallisation of the microspheres is a particularly complex and costly process.

The object of the present invention is to provide a coloured reflective film which allows the limitations of the currently available reflective films to be overcome.

The features and advantages of the present invention will become more apparent from the detailed description that follows of one embodiment of the invention in question, illustrated by way of non-limiting example in the appended figures, in which:

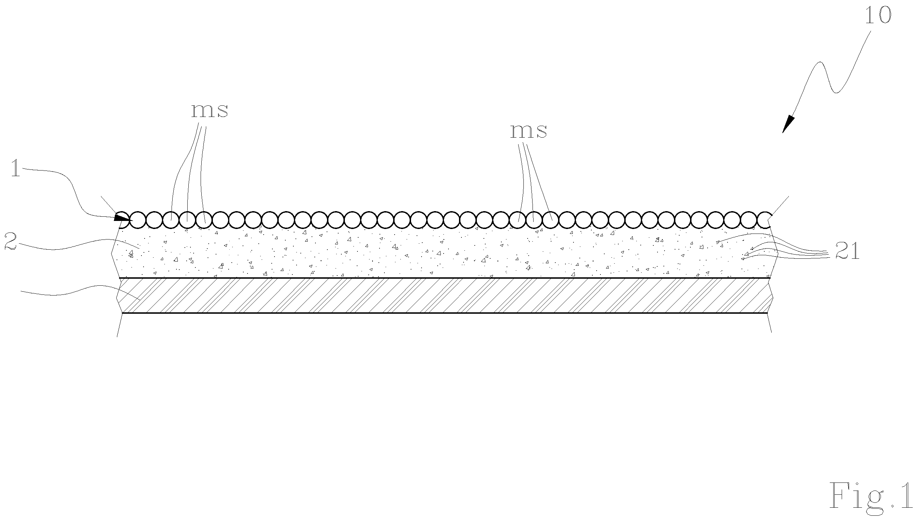

- Figure 1 shows a sectional view of a section of film according to the present invention;

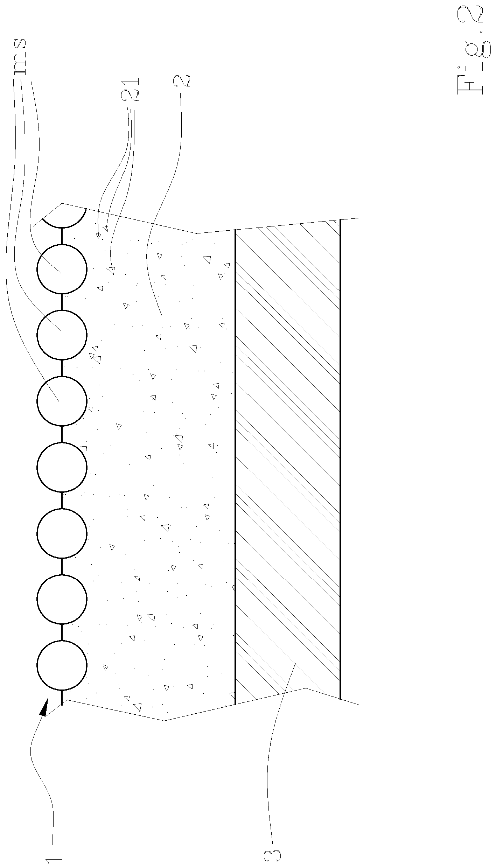

- Figure 2 shows an enlarged view of the film of figure 1.

The reflective film (10) according to the present invention comprises a first layer (1), comprising a plurality of microspheres (ms).

The film comprises a second layer (2), which performs the function of support and anchoring for the microspheres (ms). Basically, the microspheres (ms) are partially embedded in the second layer (2).

The second layer (2) comprises a resin. Preferably, the resin is a polyurethane resin. It would nonetheless be possible to use a vinyl resin or an aliphatic resin. Preferably, the resin is of the high-transparency type.

A third layer (3) is associated with the second layer (2), on the opposite side with respect to the first layer (1). The third layer (3) performs the function of support for the second layer (2) and allows application of the film to a support surface. The third layer (3) comprises a resin. In this case as well, the resin is preferably a polyurethane resin, but it would be possible to use a vinyl resin or an aliphatic resin. Preferably, but not necessarily, the third layer (3) is adhesive.

Advantageously, the second layer (2) comprises a plurality of reflective particles (21). In a preferred embodiment, the reflective particles are formed of glass crystals and/or methacrylate crystals.

The reflective particles (21) allow a reflected radiation of considerable intensity to be obtained, without the need to metallise the microspheres. In fact, a considerable percentage of incident radiation reflected by the reflective particles (21) is also added to the percentage of incident radiation that the microspheres reflect in any case, even in the absence of metallisation.

Advantageously, the reflective particles (21) are coloured, in order to obtain the reflection of a coloured light. For example, the reflective particles (21) are golden. The use of coloured reflective particles (21) allows a reflective film with a metallised effect to be obtained. In particular, the colour of the reflective particles (21) is highly evident in a dimly lit environment, when the film is hit by a directional luminous radiation, coming, for example, from a more or less concentrated light beam coming from a projector or a lamp. The colour is less evident, but nonetheless clearly visible, when the film is illuminated by a diffused light, such as, for example, daylight or another type of diffused lighting.

In a possible embodiment, the reflective particles (21) comprise glass fragments. For example, the reflective particles (21) are formed of glass fragments of various shapes and dimensions, which can be homogeneous or different to each other. It is also possible to use fragments of coloured glass to obtain the reflection of a coloured light. In an advantageous embodiment, the reflective particles (21) are made of borosilicate glass, covered with metal oxides. This allows the percentage of reflected light to be increased. In another possible embodiment, the reflective particles (21) are made of methacrylate.

Preferably, but not necessarily, the reflective particles (21) have a particle size comprised between 50 and 250 microns. This allows the percentage of reflected light to be increased. Reflective particles (21) with a particle size close to 200 microns allow the highest percentage of reflected light to be obtained.

The reflective particles (21) are dispersed uniformly in the second layer (2). In particular, the reflective particles (21) are mixed with the resin in the second layer (2) in the fluid state. The fluid resin with the reflective particles (21) can therefore be spread or applied with the same methods as a resin normally used for the production of reflective films.

In a possible embodiment, the second layer (2) comprises a resin and a dye. This allows a highly intense and visible overall colouring of the film to be obtained.

In a possible embodiment, the third layer (3) comprises a white resin. The use of a white resin allows the colouring of the reflected light to be made more visible.

The film can be produced in the following manner.

The microspheres (ms) can initially be associated with a temporary support layer, made of PET or PE for example. Said temporary support is preferably on a continuous reel, in order to allow a continuous processing known in the field.

Subsequently, on the opposite side to the one of the temporary support layer, a layer of binding resin, which binds the microspheres (ms) to each other, can be spread.

The layer of binding resin can therefore be subjected to a corona treatment, in order to facilitate adhesion of the further layers.

Subsequently, on the same side on which the binding resin has been spread, it is possible to spread the second layer (2) provided with reflective particles (21).

In a subsequent step, it is possible to spread the third layer (3) on the second layer (2).

All the steps described can be performed continuously, processing on a continuous reel in a manner known in the field.

The reflective film according to the present invention overcomes the limitations of the reflective films currently available.

In fact, the presence of the second layer (2) provided with reflective particles (21) allows the reflected percentage of incident luminous radiation to be considerably increased, i.e. it allows the intensity of the reflected luminous radiation to be considerably increased. This allows dyes to be used both in the second layer (2), and for the creation of the reflective particles (21), nonetheless maintaining a very high intensity of the reflected luminous radiation.

Furthermore, the film according to the present invention can be produced without the need to alter substantially the current production methods for producing reflective microsphere films.

## Claims

1. A reflective film, comprising:
a first layer (1), comprising a plurality of microspheres (ms);
a second layer (2) comprising a resin in which the microspheres (ms) are partially embedded;
a third layer (3) comprising a resin, associated with the second layer (2) on the opposite side with respect to the first layer (1);
**characterised in that**:
the second layer (2) comprises a plurality of reflective particles (21).

2. The reflective film according to claim 1, wherein the reflective particles (21) are coloured.

3. The reflective film according to one of the preceding claims, wherein the reflective particles (21) comprise glass fragments.

4. The reflective film according to claim 3, wherein the glass fragments are coloured.

5. The reflective film according to one of the preceding claims, wherein the third layer (3) comprises an adhesive.

6. The reflective film according to one of the preceding claims, wherein the third layer (3) comprises a white resin.

7. The reflective film according to one of the preceding claims, wherein the second layer (2) comprises a resin and a dye.

8. The reflective film according to one of the preceding claims, wherein the resin of the second layer (2) is a polyurethane resin.

9. The reflective film according to one of the preceding claims, wherein the resin of the third layer (3) is a polyurethane resin.
